(19) Europäisches Patentamt
European Patent Office
Office européen des brevets

(11) **EP 4 760 610 A1**

(12) **EUROPEAN PATENT APPLICATION**

(43) Date of publication:
**17.06.2026 Bulletin 2026/25**

(21) Application number: **24383360.5**

(22) Date of filing: **12.12.2024**

(51) International Patent Classification (IPC):
*G06Q 10/04* $^{(2023.01)}$   *G06Q 50/40* $^{(2024.01)}$
*G08G 1/01* $^{(2006.01)}$   *G08G 5/22* $^{(2025.01)}$
*G08G 5/26* $^{(2025.01)}$   *G08G 5/55* $^{(2025.01)}$
*H04L 47/12* $^{(2022.01)}$   *G06N 20/00* $^{(2019.01)}$
*G06N 3/08* $^{(2023.01)}$

(52) Cooperative Patent Classification (CPC):
**G06N 20/00; G06N 3/08; G06Q 10/04;
G06Q 10/047; G06Q 50/40; G08G 1/0133;
G08G 5/22; G08G 5/26; G08G 5/55**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **The Boeing Company**
**Arlington, VA 22202 (US)**

(72) Inventors:
• **GÜEMES JIMENEZ, Alejandro**
  **28042 MADRID (ES)**
• **COSTAS ÁLVAREZ, Pablo**
  **28042 MADRID (ES)**
• **SCARLATTI, David**
  **28042 MADRID (ES)**
• **DREWS, Robin Christian**
  **63263 NEU-ISENBURG (DE)**

(74) Representative: **ZBM Patents - Zea, Barlocci &
Markvardsen**
**Rambla de Catalunya, 123**
**08008 Barcelona (ES)**

(54) **AIRPORT CONGESTION MONITORING**

(57)    A device includes one or more processors configured to generate an operational congestion metric associated with a particular airport, wherein the operational congestion metric is based at least on one or more usage metrics for the particular airport. The one or more processors are configured to generate an impact congestion metric non-linearly based at least on the operational congestion metric. The one or more processors are configured to determine based on the impact congestion metric, a congestion prediction for the particular airport. The one or more processors are configured to communicate a congestion alert for the particular airport, wherein the congestion alert is based at least on the congestion prediction.

EP 4 760 610 A1

## Description

### FIELD OF THE DISCLOSURE

The present disclosure is generally related to monitoring airport congestion.

### BACKGROUND

Air traffic networks are highly dependent on airport arrival and departure processes, which are linked to capacity constraints and delay propagation. In order to minimize delays in air traffic networks and generate an improved balance between demand and capacity balance, it is important to accurately assess and predict the potential congestion in airports.

Traditionally, congestion at an airport is measured based on comparing scheduled times to actual times of flights departing from or arriving at the airport. For example, a traditional metric used for calculating congestion is the average departure delay - e.g., the average of the difference between each flight's scheduled departure time and actual departure time - over a time period. However, flight schedule information is often inaccurate and may vary significantly over time, in addition to not being easily accessible outside of each particular airport.

Another conventional approach that may be used by airports is to calculate congestion based on the passenger flow and resources that are available, such as ground personnel and tower air traffic controllers. This approach may work well for generating custom congestion calculations for a specific airport, but because the input data (e.g., passenger flow and resource availability) is not globally available and the models that are used may be customized for the particular airports, the utility of such techniques is largely restricted to local calculations at each particular airport.

An improved system to predict potential airport congestion that does not rely on schedule information or other specific data that is only available at each specific airport would enable enhanced operation and efficiency of air traffic networks.

### SUMMARY

One aspect of the subject matter disclosed in detail below is a device that includes one or more processors configured to generate an operational congestion metric associated with a particular airport, wherein the operational congestion metric is based at least on one or more usage metrics for the particular airport. The one or more processors are configured to generate an impact congestion metric non-linearly based at least on the operational congestion metric. The one or more processors are configured to determine based on the impact congestion metric, a congestion prediction for the particular airport. The one or more processors are configured to communicate a congestion alert for the particular airport, wherein the congestion alert is based at least on the congestion prediction.

Another aspect of the subject matter disclosed in detail below is a method that includes generating, by a processor, an operational congestion metric associated with a particular airport, wherein the operational congestion metric is based at least on one or more usage metrics for the particular airport. The method includes generating, by the processor, an impact congestion metric non-linearly based at least on the operational congestion metric. The method includes determining, by the processor, based on the impact congestion metric, a congestion prediction for the particular airport. The method includes communicating, by the processor, a congestion alert for the particular airport, wherein the congestion alert is based at least on the congestion prediction.

Another aspect of the subject matter disclosed in detail below is a non-transitory computer-readable medium that includes instructions that, when executed by one or more processors, cause the one or more processors to generate an operational congestion metric associated with a particular airport, wherein the operational congestion metric is based at least on one or more usage metrics for the particular airport. The instructions, when executed by the one or more processors, cause the one or more processors to generate an impact congestion metric non-linearly based at least on the operational congestion metric. The instructions, when executed by the one or more processors, cause the one or more processors to determine based on the impact congestion metric, a congestion prediction for the particular airport. The instructions, when executed by the one or more processors, cause the one or more processors to communicate a congestion alert for the particular airport, wherein the congestion alert is based at least on the congestion prediction.

The features, functions, and advantages described herein can be achieved independently in various implementations or may be combined in yet other implementations, further details of which can be found with reference to the following description and drawings.

### BRIEF DESCRIPTION OF THE DRAWINGS

FIG. 1 illustrates a system is illustrated including components associated with monitoring airport congestion, in accordance with some examples of the subject disclosure.

FIG. 2 is a diagram depicting an example operational throughput ratio (OTR) calculation for a plurality of aircraft operations over time, in accordance with some examples of the subject disclosure.

FIG. 3 illustrates an example graph illustrating a relationship between an operational congestion metric and an impact congestion metric, in accordance with some examples of the subject disclosure.

FIG. 4 is a flowchart illustrating a method of monitoring airport congestion, in accordance with some examples of the subject disclosure.

FIG. 5 is a block diagram of a computing environment including a computing device configured to support aspects of computer-implemented methods and computer-executable program instructions (or code) according to the present disclosure.

## DETAILED DESCRIPTION

Aspects disclosed herein present systems and methods for monitoring airport congestion. Conventional techniques for monitoring airport congestion typically rely on schedule information that may be inaccurate and difficult to access outside of each particular airport and/or other data such as passenger flow and resource availability that is only available at each particular airport, imposing difficulties for air traffic management to predict potential airport congestion for air traffic between multiple airports.

By introducing techniques for using globally available data in order to calculate congestion in any airport in the world for which such data is available, the present disclosure solves the problem of predicting potential airport congestion using airport data that is often inaccurate or difficult to access. For example, according to the present disclosure, a usage metric for a particular airport can be calculated from information that may be extracted from a globally available data source such as surveillance information (e.g., position reports), airport mapping database (AMDB) data, and meteorological reports.

Airport traffic information can be computed in real-time from such globally available data and used to determine the congestion level in each airport of interest. Examples of traffic information that can be used include, for a particular time interval and at a particular airport, the number of taxi operations for incoming aircraft, the number of taxi operations for outgoing aircraft, the number of aircraft that have taken off, the number of aircraft that have landed, the number of aircraft on approach, the number of aircraft moving on the ground, and the number of aircraft following a holding pattern. These traffic counts can be determined using a sliding window to measure occurrences in various time intervals. In addition, weather information may be used to distinguish between different types of weather conditions, such as different visibility conditions, at the airport during each time interval. Such information may be grouped by airport and hour of the day to obtain historical data distributions of the total operations occurring at that hour in the specified airport. The historical data distributions may further be refined based on the various types of weather conditions that were present at the specified airports in which the operations occurred.

The systems and methods disclosed herein can use the exemplary usage metrics described above to generate one or more traffic congestion metrics. For example, an operational congestion metric can include an operational throughput ratio (OTR). The OTR is a ratio between actual and scheduled operations. In some implementations, a nominal situation includes an OTR of one, which indicates that a particular airport is handling expected operations. An OTR value greater than one indicates that the particular airport is suffering an overflow of inbound and/or outbound flights. An OTR value less than one indicates that the particular airport is unable to process expected operations.

As another example, an impact congestion metric can be based on the operational congestion metric. In some implementations, this can include combining OTR data for a particular airport with operational delay data. The delay data can indicate, for example, mean delay for relevant operations at the particular airport. Both the OTR values and the delay values can be calculated over a predetermined time period. The time periods for each can be the same or different. For example, the time window associated with the OTR-based operational congestion metric can be approximately thirty minutes. To compute delay data, the systems and methods disclosed herein can count a quantity of operations every ten minutes and the associated mean delay in the last thirty minutes.

As described in more detail below, the impact congestion metric can be combined in a non-linear fashion. For example, the OTR data and delay data can be combined into a single congestion metric for ease of understanding by consumers of the congestion metric(s). Takeoffs and arrivals can each have a respective congestion metric. The congestion metric allows users to have a relatively quick, understandable insight of the current context of traffic flow at an airport.

The congestion metric(s) can also be used to generate a congestion prediction for a particular airport. For example, a trained machine learning model can generate the congestion prediction. Based on the congestion prediction, the systems and methods disclosed herein can also generate a congestion alert. The congestion alert can inform users of information related to the airport's predicted congestion (e.g., unexpectedly low congestion, unexpectedly high congestion, congestion updates, etc.).

A system using the disclosed techniques thus uses a data-driven statistical approach to determine or predict the congestion of a particular airport at a particular time. A technical advantage of the subject disclosure includes improved automated flight planning. The disclosed systems and methods provide a holistic overview over worldwide airport congestion status through accurate and global calculation of airport congestion using publicly available data sources instead of incomplete datasets or data that is very specific for individual airports and that is not globally available. As a result, use of the disclosed systems and methods enable more accurate flight planning.

Another technical advantage of the subject disclosure is an improved congestion prediction computing system. Certain previous congestion prediction systems do not consider the efficiency of historical operational data. This can to inaccurate congestion predictions based on abnormal congestion conditions at different points in the past. The disclosed systems and methods account for historical data efficiency, thus improving automated congestion prediction computing systems. For example, the systems and methods disclosed herein describe congestion metric(s) that account for historical efficiency of a particular airport by periodically calculating parameters of a logistic function relating an operational congestion metric and an impact congestion metric, as well as periodically calculating a nominal point for the relationship.

Specific examples are illustrated in the figures and the following description. All of the figures are covered by the present solution with features common across the various figures. The figures include multiple examples of different types of systems, devices, and operations that are possible in conjunction with the present solution. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific embodiments or examples described below, but by the claims and their equivalents.

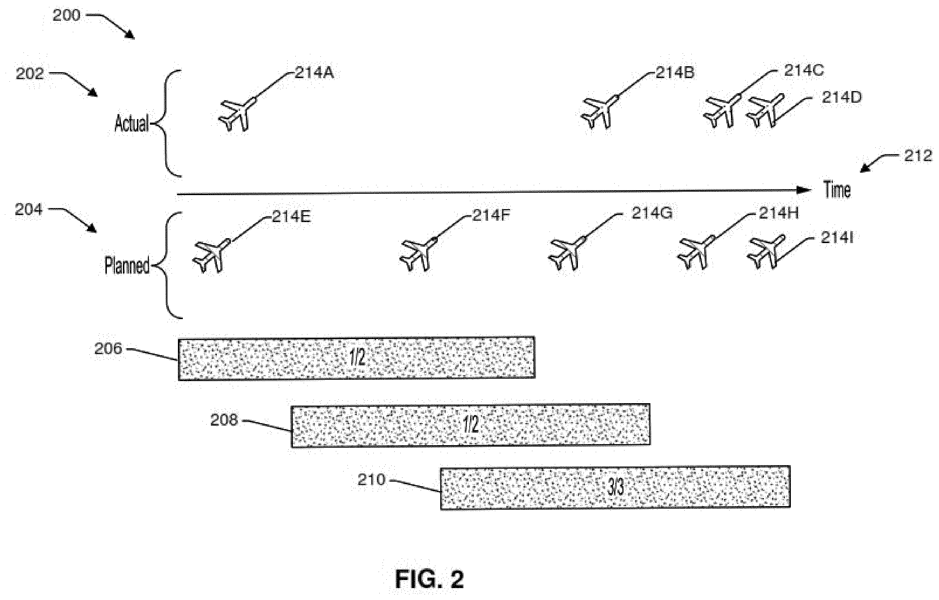

Particular examples are described herein with reference to the drawings. In the description, common features are designated by common reference numbers throughout the drawings. In some drawings, multiple instances of a particular type of feature are used. Although these features are physically and/or logically distinct, the same reference number is used for each, and the different instances are distinguished by addition of a letter to the reference number. When the features as a group or a type are referred to herein (e.g., when no particular one of the features is being referenced), the reference number is used without a distinguishing letter. However, when one particular feature of multiple features of the same type is referred to herein, the reference number is used with the distinguishing letter. For example, referring to FIG. 2, multiple aircraft operations are illustrated and associated with reference numbers 214A-214I. When referring to a particular one of these aircraft operations, such as the aircraft operation 214A, the distinguishing letter "A" is used. However, when referring to any arbitrary one of these aircraft operations or to these aircraft operations as a group, the reference number 214 is used without a distinguishing letter.

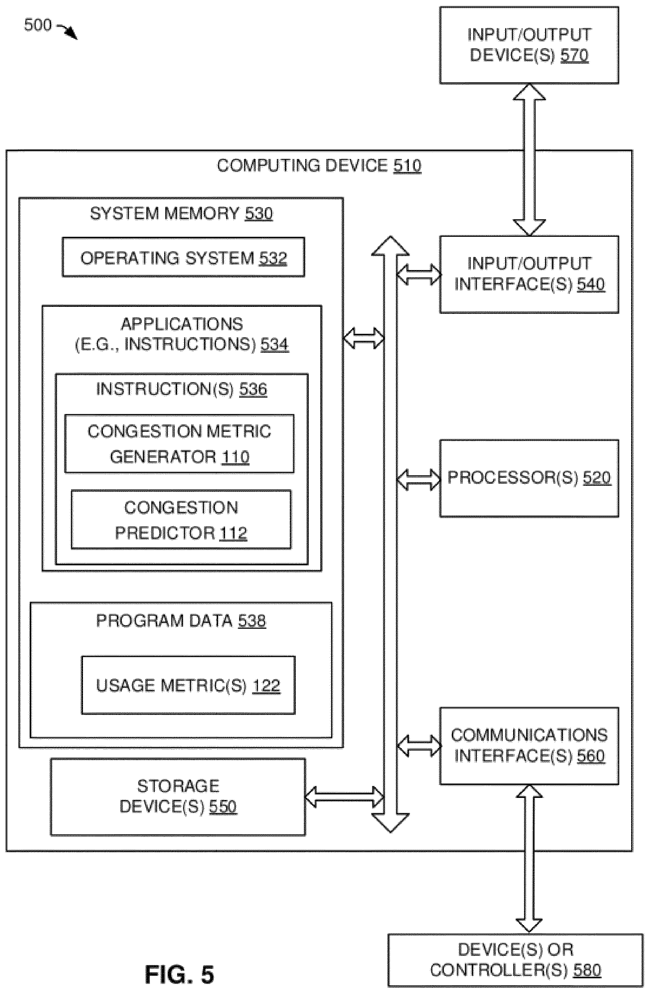

As used herein, various terminology is used for the purpose of describing particular examples and is not intended to be limiting. For example, the singular forms "a," "an," and "the" are intended to include the plural forms as well, unless the context clearly indicates otherwise. Further, some features described herein can be singular or plural. To illustrate, FIG. 5 depicts a device including one or more processors ("processor(s)" 520 in FIG. 5), which indicates that the device may include a single processor 520 or may include multiple processors 520. For ease of reference herein, such features are generally introduced as "one or more" features, and are subsequently referred to in the singular unless aspects related to multiple of the features are being described.

The terms "comprise," "comprises," and "comprising" are used interchangeably with "include," "includes," or "including." Additionally, the term "wherein" is used interchangeably with the term "where." As used herein, "exemplary" indicates an example, an implementation, and/or an aspect, and should not be construed as limiting or as indicating a preference or a preferred implementation. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements.

As used herein, "obtaining," "generating," "calculating," "using," "selecting," "accessing," and "determining" are interchangeable unless context indicates otherwise. For example, "obtaining," "generating," "calculating," or "determining" a parameter (or a signal) can refer to actively generating, calculating, or determining the parameter (or the signal) or can refer to using, selecting, or accessing the parameter (or signal) that is already generated, such as by another component or device. As used herein, a device that is "configured to" perform an operation includes dedicated circuitry, hardware, or other components that enable the operation to be performed by the device. As an example, programming of a general purpose processor with instructions that, when executed by the processor, cause the processor to perform a particular operation results in a specialpurpose processor that is configured to perform that particular operation. A device can be configured to perform multiple operations. A device that is configured to perform an operation does not necessarily exclude the device from being configured to perform other operations.

As used herein, "coupled" can include "communicatively coupled," "electrically coupled," or "physically coupled," and can also (or alternatively) include any combinations thereof. Two devices (or components) can be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled can be included in the same device or in different devices and can be connected via electronics, one or more connectors, or inductive coupling, as illustrative, non-limiting examples. In some implementations, two devices (or components) that are communicatively coupled, such as in electrical communication, can send and receive electrical signals (digital signals or analog signals) directly or indirectly, such as via one or more wires, buses, networks, etc. As used herein, "directly coupled" is used to describe two devices that are coupled (e.g., communicatively coupled, electrically coupled, or physically coupled) without intervening components.

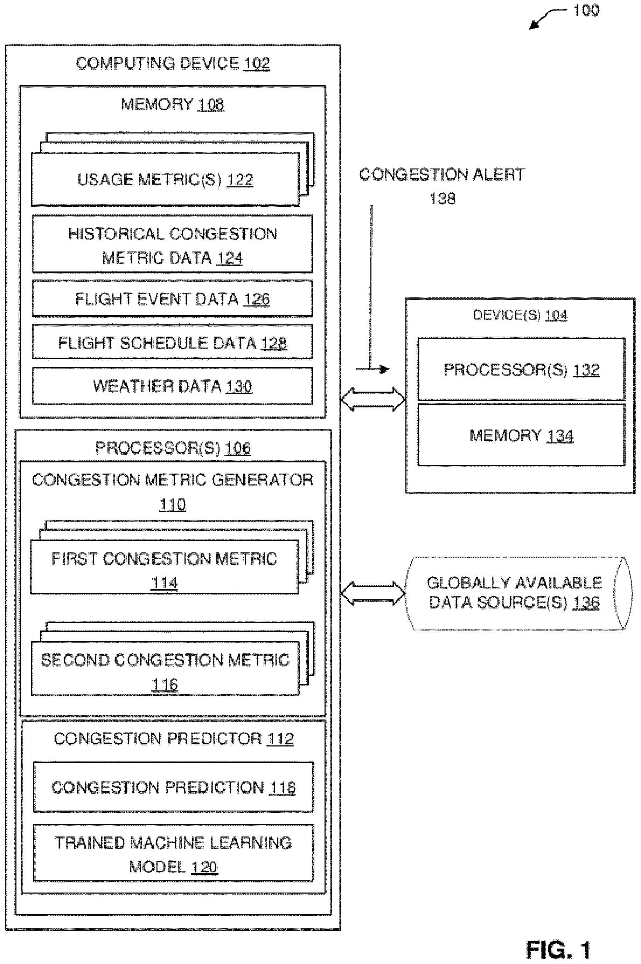

Referring to FIG. 1, a system 100 is illustrated including components associated with monitoring airport congestion, in accordance with some examples of the subject disclosure. The system 100 includes a computing device 102 coupled to one or more devices 104 and one or more globally available data sources 136. The device(s) 104 can include one or more electronic devices including one or more processors 132 coupled to a memory 134. The device(s) 104 can be configured to communicate data to the computing device 102 (e.g., one or more usage metrics 122), receive data from the computing device 102 (e.g., one or more congestion alerts 138), or some combination thereof.

The globally available data source(s) 136 include one or more sources of global data associated with aircraft traffic. For example, the globally available data source(s) 136 can include an airport mapping database that provides map data regarding runways, taxiways, etc., of various airports, an aircraft tracking data source that provides position data (e.g., radar surveillance data) of aircraft in the vicinity of the airports, and a weather data source that provides current weather data, weather forecasts, or both, for the airports.

The globally available data source(s) 136 can include an airport mapping database (AMDB), an aircraft tracking data source, a weather data source, or some combination thereof. The airport mapping database can include, or correspond to, one or more AMDB storing data associated with one or more airports subject to congestion monitoring by the system 100. To illustrate, an AMDB can include a dataset that represents the spatial layout of an airport in terms of features (e.g., runways, taxiways, parking stands) that may be described as points, lines, polygons, etc., in addition to other information such as surface types. In an example, the AMDB includes data compliant with a geographic information system (GIS)-type format.

The aircraft tracking data source can include, or correspond to, a source or collection of position reports.

To illustrate, the aircraft tracking data source can include an internet-based service that provides real-time commercial aircraft flight tracking information, origins and destinations, flight numbers, aircraft types, positions, altitudes, headings and speeds from one or more aggregated sources, such as a FLIGHTRADAR24-type service (FLIGHTRADAR24 is a trademark of Flightradar24 AB, Stockholm, Sweden).

The weather data source can include, or correspond to, a collection of current weather reports. For example, the weather reports can correspond to Meteorological Terminal Aviation Routine Weather Report (METAR)-type reports from airports, from weather observation stations, from one or more sources, or any combination thereof. Alternatively, or in addition, the weather reports can correspond to terminal aerodrome forecast (TAF)-type forecast reports.

The computing device 102 includes one or more processors 106 coupled to a memory 108. The processor(s) 106 can include various components such as a congestion metric generator 110, a congestion predictor 112, or a combination thereof. In some implementations, the congestion metric generator 110 can be configured to generate an operational congestion metric 114 associated with a particular airport. In some aspects, the congestion metric generator 1102 can be configured to generate a plurality of operational congestion metrics 114, where each of the plurality of operational congestion metrics 114 is associated with a different particular airport. In the same or alternative aspects, the operational congestion metric 114 can include a plurality of congestion metrics. For example, the congestion metric generator 110 can be configured to generate the operational congestion metric 114 including generating a first takeoff congestion metric associated with take-offs at the particular airport and a first landing congestion metric associated with landings at the particular airport.

The operational congestion metric 114 is based at least on one or more usage metrics 122 for the particular airport. As described above, the usage metric(s) 122 can include operational data associated with the particular airport. For example, the usage metric(s) 122 can include flight event data, flight schedule data, weather data, or a combination thereof. As another example, the usage metric(s) 122 can include planned flight event data, planned flight operational data, actual flight event data, actual flight operational data, or a combination thereof. The usage metric(s) 122 can each include data that is associated with a timeframe. The timeframe for each of the usage metric(s) 122 need not be the same. For example, flight event data, flight schedule data, and weather data can be received by the computing device in real-time or near real-time, hourly, daily, etc., or a combination thereof. In some aspects, the usage metric(s) 122 can be stored at the memory 108. In a particular aspect, the processor(s) 106 can be configured to obtain the usage metric(s) 122. For example, the processor(s) 106 can be configured to obtain the usage metric(s) 122 from the globally available data source(s) 136.

In some aspects, the operational congestion metric 114 can include an operational throughput ratio (OTR). As described above, the OTR is a ratio between actual and scheduled operations. The OTR can be associated with a first time window for operations at the particular airport, as described below with reference to FIG. 2. For example, the first time window can include a thirty-minute time window. In other examples, the first time window can include other values for an OTR time window (e.g., ten minutes, one hour, etc.). A smaller time window can generally provide enhanced temporal resolution and relatively less attenuation of congestion than larger time windows, while a larger time window can generally be relatively less prone to noise as compared to a smaller time window. Various implementations utilize respective time windows that balance such competing factors, such as in accordance with various specific performance criteria.

In some implementations, the congestion metric generator 110 can be configured to generate an impact congestion metric 116 non-linearly based at least on the operational congestion metric 114. In some aspects, the congestion metric generator 110 can be configured to generate a plurality of impact congestion metrics 116, where each of the plurality of impact congestion metrics 116 is associated with a different particular airport. In the same or alternative aspects, the impact congestion metric 116 can include a plurality of congestion metrics. For example, the congestion metric generator 110 can be configured to generate the impact congestion metric 116 including generating a second takeoff congestion metric associated with take-offs at the particular airport and a second landing congestion metric associated with landings at the particular airport.

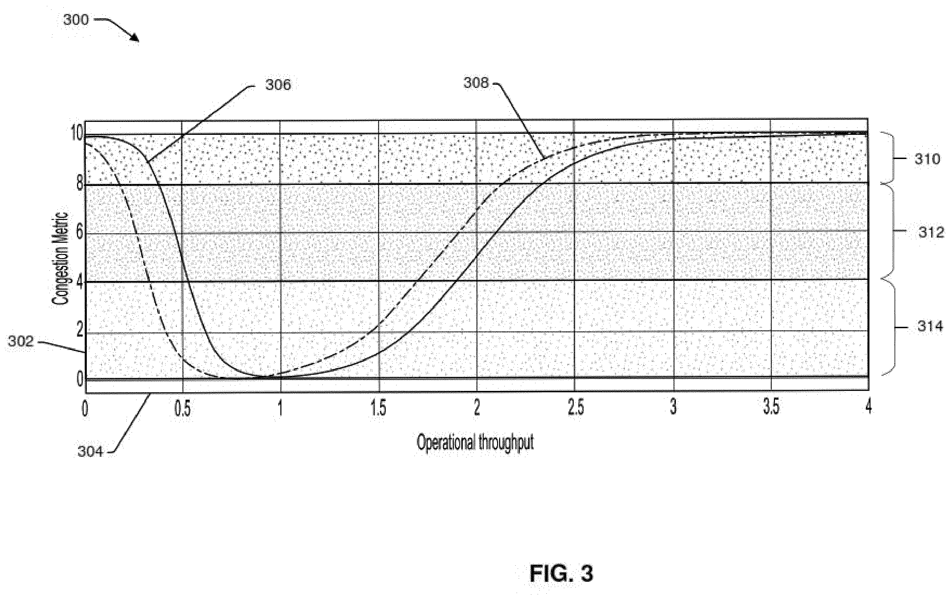

The impact congestion metric 116 is nonlinearly based on the operational congestion metric 114. For example, as illustrated below with reference to FIG. 3, the impact congestion metric 116 is related to the operational congestion metric 114 by a logistic function. In a particular example, the impact congestion metric 116 is related to the operational congestion metric 114 according to the following formula, where $L$ is an amplitude of the impact congestion metric 116, $k$ is a growth rate associated with the impact congestion metric 116, and $x_0$ is a midpoint for the impact congestion metric 116 (i.e., a value at which $L/2$ is obtained):

$$f(x) = \frac{L}{1 + e^{-k(x - x_0)}}$$

In some aspects, the amplitude $L$ of the impact congestion metric 116 can be predetermined to enable ready understanding of the impact congestion metric 116 to a user. For example, the amplitude $L$ can have a value of ten to enable a one-to-ten scale for the impact congestion metric 116.

In some implementations, the congestion metric generator 110 can be configured to further modify the impact congestion metric 116. For example, the congestion metric generator 110 can be configured to determine the impact congestion metric 116 including modifying the impact congestion metric 116 based at least on a value of the impact congestion metric 116 during a second time window. The second time window is earlier than the first time window. For example, the congestion metric generator 110 can classify the impact congestion metric 116 into one of a plurality of congestion tiers, as illustrated below with reference to FIG. 3. To illustrate, the plurality of congestion tiers can include a quantity of classification tiers such as "very low," "medium," and "very high." Each classification tier can have a corresponding color for reporting purposes (e.g., green, yellow and red, respectively).

An initial classification into a congestion tier can be based on a value of the impact congestion metric 116 during the first time window. In some implementations, variance of the impact congestion metric 116 from one time window to another can be volatile. In order for a congestion prediction to be more useful or information to a user, the congestion metric generator 110 can be configured to cap a change in the value for the impact congestion metric 116 from one time window to a subsequent time window. To illustrate, if the impact congestion metric 116 indicates a "very high" level of traffic congestion (e.g., ten on a one-to-ten scale) in an earlier time window but a "very low" level of traffic congestion (e.g., two on the one-to-ten scale) in a subsequent time window, the congestion metric generator 110 can be configured to cap the value of the impact congestion metric 116 to more closely align with a user's experience of changing traffic congestion. The congestion metric generator 110 can be configured to only change the impact congestion metric 116 one congestion tier at a time from one reporting time window to the next reporting time window. Thus, even though the impact congestion metric 116 has a value of "very low" in the example above, the impact congestion metric 116 can be communicated to the user (e.g., via the congestion alert 138) as a "medium" level of traffic congestion.

In another configuration, the congestion metric generator 110 can be configured to cap the value for the impact congestion metric 116 by limiting the change in the value for the impact congestion metric 116 between successive time windows. In an illustrative example, the congestion metric generator 110 can limit the amount of change allowed in the one-to-ten scale of the impact congestion metric 116 from one reporting time window to the next reporting time window. For example, if the impact congestion metric 116 has a value of ten in an earlier time window (i.e., the second time window) and a value of zero in a later time window (i.e., the first time window), the congestion metric generator 110 can be configured to only allow the impact congestion metric 116 to change by one unit on the one-to-ten scale, thus reporting a value of nine for the impact congestion metric 116 in the later time window. Such capping can be continued through subsequent time windows. For example, if the impact congestion metric 116 has a value of five in third time window following the first time window, the congestion metric generator 110 can be configured to report a value of eight on the one-to-ten scale (i.e., based on the value being actually lower than the previously-reported value, but capped to only reduce by one). If the value of the impact congestion metric 116 goes back up to ten in a fourth time window following the third time window, the congestion metric generator 110 can be configured to report a value of nine on the one-to-ten scale (i.e., based on the value being actually higher than the previously reported value, but capped to only increase by one).

In some implementations, the processor(s) 106 can also include the congestion predictor 112. The congestion predictor 112 can be configured to determine based on the impact congestion metric 116, a congestion prediction 118 for the particular airport. For example, the congestion predictor 112 can take into account historical congestion metric data, operational data, context data, etc. to determine the congestion prediction 118.

In some aspects, the congestion predictor 112 can be configured to determine the congestion prediction 118 including determining, by a trained machine learning model 120, the congestion prediction 118. The trained machine learning model 120 can be trained on certain training data. The training data can include the historical congestion metric data 124, flight event data 126, flight schedule data 128, weather data 130, one or more other sets of data, or some combination thereof. In some configurations, this data can be stored at the memory 108. The trained machine learning model 120, once trained, can be configured to determine the congestion prediction 118 based on the impact congestion metric 116. In some configurations, the trained machine learning model 120, once trained, can also (or alternatively) receive as inputs to a congestion prediction operation other data including hour of the day, day of the year, departure and/or arrival data from actual operations, departure and/or arrival data from planned operations, holdings, diversions, go around, number of taxi operations for incoming aircraft and their average duration, number of taxi operations for outgoing aircraft and their average durations, number of aircraft that have arrived and/or departed in the most recent time window, etc., or some combination thereof.

In some implementations, the processor(s) 106 can also be configured to communicate a congestion alert 138 for the particular airport. The congestion alert 138 is based at least on the congestion prediction 118. For example, the congestion alert 138 can include warning alerts (e.g., "abnormally high traffic congestion," "abnormally low traffic congestion," etc.), informational alerts (e.g., a report of the current value of the impact congestion metric 116), other appropriate alerts, or some combination thereof. The congestion alert 138 can include data associated with various types of alerts, including text, visual indications, audio indications, other appropriate indications, or some combination thereof. Additionally, the congestion alert 138 can include data associated with the impact congestion metrics 116 for a plurality of airports. For example, the congestion alert 138 can include data associated with a map of an area including a plurality of airports, with each airport associated with a color indicating its current traffic congestion level (e.g., green for "low," yellow for "medium," red for "high").

In some implementations, the congestion alert 138 can be received by the device(s) 104. The device(s) 104 can include an electronic device associated with airport personnel (e.g., a smartphone, tablet computer, etc.), air traffic management systems, etc. Each of the device(s) 104 can be configured to further communicate and/or modify the data of the congestion alert 138 prior to presenting the congestion alert 138 to a user of the device(s) 104. For example, in the example above including a map indicating a traffic congestion level for a plurality of airports, the processor(s) 132 of the device(s) 104 can be configured to generate map data that can be used to display the data of the congestion alert 138 to improve user experience for a user of the device(s) 104.

In some examples, by issuing the congestion alert 138, airport personnel and/or air traffic management systems can take proactive measures to reduce or mitigate the predicted congestion, or potential effects of the congestion, at the airport. As an example, additional personnel may be placed on notice that they may be called into service to help alleviate the predicted congestion.

In some examples, by issuing the congestion alert 138, airport personnel and/or air traffic management systems can take remedial measures to reduce or mitigate the congestion at the airport. As an example, additional personnel may be called into service to help alleviate the congestion.

By performing a mitigation action in response to updating of one or more congestion predictions 118, scheduling adjustments may be made to reflect expected delays due to increased airport congestion, and the adjusted flight predictions may be propagated through the schedule of arriving and departing flights at the airport to provide a more accurate schedule of flight operations for use by airport personnel, aircraft crews, and passengers.

By performing a mitigation action that includes reallocating one or more resources at the particular airport, resources such as gate assignments, flight crews, ground staff and other resources associated with aircraft turnaround, etc., may be reallocated to reduce inefficiencies that are anticipated to occur due to delays arising as a result of airport congestion. For example, when airport congestion is expected to delay the arrival of a particular aircraft which, in turn, will cause an expected delay in the departure of that particular aircraft on a subsequent flight, resource allocation can include performing a tail swap in which a different aircraft is assigned to the subsequent flight to reduce or eliminate the expected delay in the departure of that flight.

By performing a mitigation action that includes adjusting a flight plan of an aircraft in flight to the particular airport to improve fuel efficiency of the aircraft, an efficiency of the aircraft may be improved. For example, when the estimated congestion at the arrival airport is expected to result in the aircraft flying a holding pattern upon reaching the airport, the flight plan may be adjusted to reduce the speed of the aircraft, which can improve the fuel efficiency of the aircraft for the reminder of the flight as compared to following the initial flight plan, in addition to reducing the amount of time that the aircraft is in the holding pattern.

Although the computing device 102 and the device(s) 104 may be implemented in separate devices, optionally the components associated with computing device 102 and the device(s) 104 can be included in a single device. For example, the single device can include one or more processors that include (or that are otherwise configured to perform operations associated with) the congestion metric generator 110, the congestion predictor 112, or a combination thereof. Optionally, one or more of the components, such as the trained machine learning model 120, may be implemented in another subsystem, such as a machine learning sub-system that is in communication with the congestion predictor 112. Additionally, one or more of the globally available data source(s) 136 can be integrated with one another, integrated with the computing device, distinct from the computing device 102, etc.

Although the congestion metric generator 110 and the congestion predictor 112 are illustrated as distinct components, optionally the functionality of the congestion metric generator 110 and the congestion predictor 112 can be combined into a single component.

Although the above examples describe the impact congestion metric 116 on a one-to-ten scale, such examples are provided for purposes of explanation and should not be considered limiting. For example, a impact congestion metric 116 can be based on a one-to-one hundred scale, a zero-to-fifty scale, etc. Additionally, although the above examples described the impact congestion metric 116 as related to the operational congestion metric 114 according to a logistic function, other nonlinear relationships between the operational congestion metric 114 and the impact congestion metric 116 can be included without departing from the scope of the subject disclosure.

FIG. 2 is a diagram graphically depicting an example OTR calculation 200 for a plurality of aircraft operations 214 over time, in accordance with some examples of the subject disclosure. The example OTR calculation 200 includes the plurality of aircraft operations 214 charted against a first axis 212 associated with time. The further left on the example OTR calculation 200, the earlier in time the aircraft operation 214, and the further right the later in time.

The example OTR calculation 200 includes two groups of aircraft operations 214. A first group 202 includes data indicative of actual aircraft operations (e.g., aircraft operations 214A-214D). A second group 204 includes data indicative of planned aircraft operations (e.g., aircraft operations 214E-214I). The OTR is calculated as the ratio of aircraft operations 214 in the first group 202 to the aircraft operations 214 in the second group 204 for a particular time window. The example OTR calculation 200 includes three exemplary time windows 206, 208, 210. The exemplary time windows 206, 208, 210 are of the same duration, but staggered as to the start time for each. In FIG. 2, each of the exemplary time windows 206, 208, 210 represents a thirty-minute time window, where each subsequent time window begins ten minutes after the previous time window began. Other configurations are possible without departing from the scope of the subject disclosure.

The first time window 206 indicates an OTR of 0.5 (or 1/2). In the first time window 206, there were two planned aircraft operations 214E, 214F, and one actual flight operation 214A. The second time window 208 also indicates an OTR of 0.5 (or 1/2). In the second time window 208, there were two planned aircraft operations 214F, 214G, and one actual aircraft operation 214B. The second time window 210 indicates an OTR of one (or 3/3). In the third time window 210, there were three planned aircraft operations 214G, 214H, 214I, and three actual aircraft operations 214B, 214C, 214D.

FIG. 3 illustrates an example graph 300 illustrating a relationship between an operational congestion metric and an impact congestion metric, in accordance with some examples of the subject disclosure. The graph 300 includes two relationship lines 306, 308. A first relationship line 306 is associated with an airport with a first nominal situation. A second relationship line 308 is associated with an airport with a second nominal situation. For example, the first relationship line 306 is associated with an airport with a nominal OTR of one. The second relationship line 308 is associated with an airport with a nominal OTR other than one. Each airport can have a particular set of data characteristics associated with the airport, which can lead to the particular airport having a different OTR nominal value. For example, a general aviation airport, an airport from which surveillance data is insufficient (e.g., unavailable, reported with insufficient frequency, etc.), an airport that has not provided schedule data, etc., can have a different nominal OTR value.

The example graph 300 illustrates the relationship lines 306, 308 plotted against two axes. A first axis 302 is associated with a value for an impact congestion metric (e.g., the impact congestion metric 116 of FIG. 1), while a second axis 304 is associated with an OTR value (e.g., the operational congestion metric 114 of FIG. 1). The relationship lines 306, 308 illustrate the nonlinear nature between the OTR value on the second axis 304 and the value for the impact congestion metric on the first axis 302. The nonlinear relationship can, for example, act to deemphasize values for the impact congestion metric around the nominal point for the OTR values.

The example graph 300 illustrates the relationship lines 306, 308 reflecting asymmetry around respective nominal points. For example, the relationship line 306 has a respective nominal point at OTR = 1, while the relationship line 308 has a respective nominal point at OTR < 1. At the nominal point, congestion can be relatively low (e.g., zero). The value along the first axis 302 increases nonlinearly from either side of the nominal point, but at different rates.

The example graph 300 also illustrates the values of the impact congestion metric highlighted according to a plurality of congestion tiers 310, 312, 314. The congestion tiers 310, 312, 314 can indicate, for example, a "low," "medium," and "high" level of traffic congestion. A first congestion tier 314 is associated with the low traffic congestion tier, a second congestion tier 312 is associated with the medium traffic congestion tier, and a third congestion tier 310 is associated with the high traffic congestion tier. Although FIG. 3 illustrates three traffic congestion tiers, more, fewer, and/or different traffic congestion tiers can be present without departing from the scope of the subject disclosure.

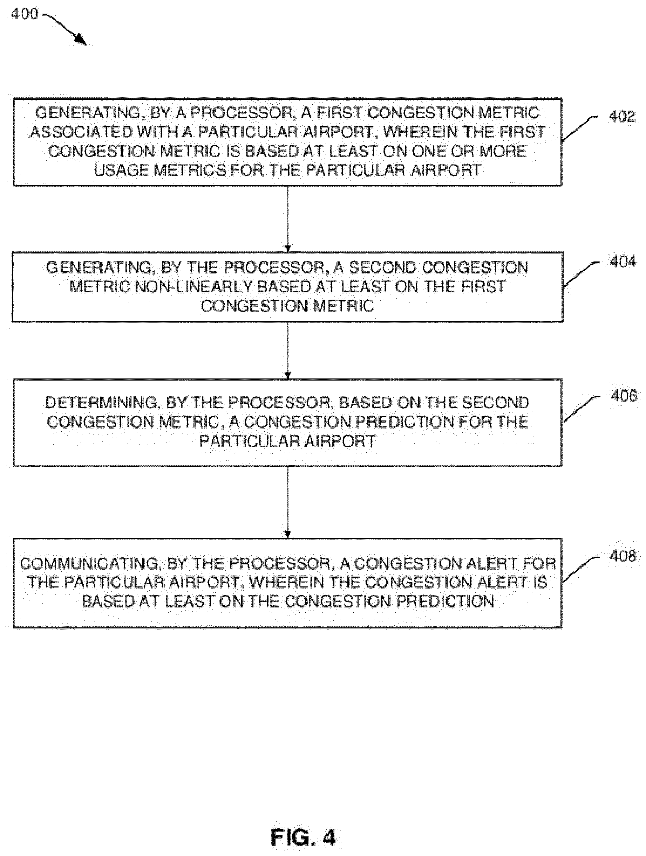

FIG. 4 is a flowchart illustrating a method 400 of monitoring airport congestion, in accordance with some examples of the subject disclosure. In a particular implementation, the method 400 is performed by the congestion metric generator 110, the congestion predictor 112, the processor(s) 106, or a combination thereof.

The method 400 includes, at block 402, generating, by a processor, an operational congestion metric associated with a particular airport, wherein the operational congestion metric is based at least on one or more usage metrics for the particular airport. For example, the congestion metric generator 110 of FIG. 1 can be configured to generate the operational congestion metric 114. The operational congestion metric(s) 114 are based at least on the usage metric(s) 122 for the particular airport.

The method 400 includes, at block 404, generating, by the processor, an impact congestion metric nonlinearly based at least on the operational congestion metric. For example, the congestion metric generator 110 of FIG. 1 can be configured to generate the impact congestion metric 116 non-linearly based at least on the operational congestion metric 114.

The method 400 includes, at block 406, determining, by the processor, based on the impact congestion metric, a congestion prediction for the particular airport. For example, the congestion predictor 112 of FIG. 1 can be configured to determine, based on the impact congestion metric 116, the congestion prediction 118 for the particular airport.

The method 400 includes, at block 408, communicating, by the processor, a congestion alert for the particular airport, wherein the congestion alert is based at least on the congestion prediction. For example, the processor(s) 106 of FIG. 1 can be configured to communicate the congestion alert 138 for the particular airport. The congestion alert 138 is based at least on the congestion prediction 118.

The method 400 optionally includes one or more actions that may be performed by the processor(s) 106 of FIG. 1. For example, the congestion metric generator 110 can generate the operational congestion metric 114 including generating a first takeoff congestion metric associated with take-offs at the particular airport and a first landing congestion metric associated with landings at the particular airport. Likewise, the congestion metric generator 110 can generate the impact congestion metric 116 including generating a second takeoff congestion metric associated with take-offs at the particular airport and a second landing congestion metric associated with landings at the particular airport.

The method 400 thus enables determination of an amount of congestion at a particular airport using globally available public data. As a result, the method 400 enables mitigation actions to be taken to reduce the effects of congestion at individual airports, for individual flights, for fleets of aircrafts operated by one or more airlines, or for an air traffic management system, as illustrative, non-limiting examples.

FIG. 5 is a block diagram of a computing environment 500 including a computing device 510 configured to support aspects of computer-implemented methods and computer-executable program instructions (or code) according to the present disclosure. For example, the computing device 510, or portions thereof, is configured to execute instructions to initiate, perform, or control one or more operations described with reference to FIGS. 1-4. In some implementations, the computing device 510 corresponds to the computing device 102, the device(s) 104, the globally available data source(s) 136, or a combination thereof.

The computing device 510 includes one or more processors 520. The one or more processors 520 are configured to communicate with system memory 530, one or more storage devices 550, one or more input/output interfaces 540, one or more communications interfaces 560, or any combination thereof. The system memory 530 includes volatile memory devices (e.g., random access memory (RAM) devices), nonvolatile memory devices (e.g., read-only memory (ROM) devices, programmable read-only memory, and flash memory), or both. The system memory 530 stores an operating system 532, which may include a basic input/output system for booting the computing device 510 as well as a full operating system to enable the computing device 510 to interact with users, other programs, and other devices. The system memory 530 stores system (program) data 538, such as usage metric(s) 122 from the globally available data source(s) 136.

The system memory 530 includes one or more applications 534 (e.g., sets of instructions) executable by the one or more processors 520. As an example, the one or more applications 534 include instructions executable by the one or more processors 520 to initiate, control, or perform one or more operations described with reference to FIGS. 1-4. To illustrate, the one or more applications 534 include instructions executable by the one or more processors 520 to initiate, control, or perform one or more operations described with reference to the congestion metric generator 110, the congestion predictor 112, or a combination thereof.

The system memory 530 includes a non-transitory, computer readable medium storing the instructions that, when executed by the one or more processors 520, cause the one or more processors 520 to generate an operational congestion metric associated with a particular airport, wherein the operational congestion metric is based at least on one or more usage metrics for the particular airport; generate an impact congestion metric nonlinearly based at least on the operational congestion metric; determine based on the impact congestion metric, a congestion prediction for the particular airport; and communicate a congestion alert for the particular airport, wherein the congestion alert is based at least on the congestion prediction.

The one or more storage devices 550 include nonvolatile storage devices, such as magnetic disks, optical disks, or flash memory devices. In a particular example, the storage devices 550 include both removable and non-removable memory devices. The storage devices 550 are configured to store an operating system, images of operating systems, applications (e.g., one or more of the applications 534), and program data (e.g., the program data 538). In a particular aspect, the system memory 530, the storage devices 550, or both, include tangible computer-readable media. In a particular aspect, one or more of the storage devices 550 are external to the computing device 510.

The one or more input/output interfaces 540 enable the computing device 510 to communicate with one or more input/output devices 570 to facilitate user interaction. For example, the one or more input/output interfaces 540 can include a display interface, an input interface, or both. For example, the input/output interface 540 is adapted to receive input from a user, to receive input from another computing device, or a combination thereof. The input/output interface 540 may conform to one or more standard interface protocols, including serial interfaces (e.g., universal serial bus (USB) interfaces or Institute of Electrical and Electronics Engineers (IEEE) interface standards), parallel interfaces, display adapters, audio adapters, or custom interfaces ("IEEE" is a registered trademark of The Institute of Electrical and Electronics Engineers, Inc. of Piscataway, New Jersey). The input/output devices 570 may include one or more user interface devices and displays, including some combination of buttons, keyboards, pointing devices, displays, speakers, microphones, touch screens, and other devices.

The one or more processors 520 are configured to communicate with one or more devices (or controllers) 580 via the one or more communications interfaces 560. For example, the one or more communications interfaces 560 can include a network interface. The one or more devices 580 can include, for example, the globally available data source(s) 136, the device(s) 104, or a combination thereof.

In conjunction with the described systems and methods, an apparatus is disclosed that includes means for generating an operational congestion metric associated with a particular airport, wherein the operational congestion metric is based at least on one or more usage metrics for the particular airport. The means for generating the operational congestion metric corresponds to the system 100, the computing device 102, the congestion metric generator 110, the device 580, the input/output device 570, the processor(s) 520, one or more other circuits or devices configured to generate the operational congestion metric, or a combination thereof.

The apparatus includes means for generating an impact congestion metric nonlinearly based at least on the operational congestion metric. The means for generating the impact congestion metric corresponds to the system 100, the computing device 102, the congestion metric generator 110, the device 580, the input/output device 570, the processor(s) 520, one or more other circuits or devices configured to generate the impact congestion metric, or a combination thereof.

The apparatus includes means for determining based on the impact congestion metric, a congestion prediction for the particular airport. The means for determining the congestion prediction correspond to the system 100, the computing device 102, the congestion predictor 112, the device 580, the input/output device 570, the processor(s) 520, one or more other circuits or devices configured to determine the congestion prediction, or a combination thereof.

The apparatus includes means for communicating a congestion alert for the particular airport, wherein the congestion alert is based at least on the congestion prediction. The means for communicating the congestion alert corresponds to the system 100, the computing device 102, the device(s) 104, the device 580, the input/output device 570, the processor(s) 520, one or more other circuits or devices configured to generate the impact congestion metric, or a combination thereof.

A non-transitory, computer readable medium can store instructions that, when executed by one or more processors, cause the one or more processors to initiate, perform, or control operations to perform part or all of the functionality described above. For example, the instructions may be executable to implement one or more of the operations or methods of FIGS. 1-5. Part or all of one or more of the operations or methods of FIGS. 1-5 may be implemented by one or more processors (e.g., one or more central processing units (CPUs), one or more graphics processing units (GPUs), one or more neural processing units (NPUs), one or more digital signal processors (DSPs)) executing instructions, by dedicated hardware circuitry, or any combination thereof.

Particular aspects of the disclosure are described below in a first set of interrelated Examples:

According to Example 1, a device includes one or more processors configured to generate an operational congestion metric associated with a particular airport, wherein the operational congestion metric is based at least on one or more usage metrics for the particular airport; generate an impact congestion metric non-linearly based at least on the operational congestion metric; determine based on the impact congestion metric, a congestion prediction for the particular airport; and communicate a congestion alert for the particular airport, wherein the congestion alert is based at least on the congestion prediction.

Example 2 includes the device of Example 1, wherein the impact congestion metric is related to the operational congestion metric by a logistic function.

Example 3 includes the device of Example 1 or Example 2, wherein the one or more processors are configured to generate the operational congestion metric including generating a first takeoff congestion metric associated with take-offs at the particular airport and a first landing congestion metric associated with landings at the particular airport.

Example 4 includes the device of any of Examples 1 to 3, wherein the one or more processors are configured to generate the impact congestion metric including generating a second takeoff congestion metric associated with take-offs at the particular airport and a second landing congestion metric associated with landings at the particular airport.

Example 5 includes the device of any of Examples 1 to 4, wherein the one or more processors are configured to determine the congestion prediction including determining, by a trained machine learning model, the congestion prediction.

Example 6 includes the device of Example 5, wherein training data for the trained machine learning model comprises historical congestion metric data, flight event data, flight schedule data, weather data, or a combination thereof.

Example 7 includes the device of any of Examples 1 to 6, wherein the one or more processors are further configured to obtain the one or more usage metrics.

Example 8 includes the device of Example 7, wherein at least one of the one or more usage metrics is obtained from a globally available data source.

Example 9 includes the device of any of Examples 1 to 8, wherein the one or more usage metrics comprise flight event data, flight schedule data, weather data, or a combination thereof.

Example 10 includes the device of any of Examples 1 to 9, wherein the one or more usage metrics comprise planned flight event data, planned flight operational data, actual flight event data, actual flight operational data, or a combination thereof.

Example 11 includes the device of any of Examples 1 to 10, wherein the operational congestion metric comprises an operational throughput ratio.

Example 12 includes the device of Example 11, wherein the operational throughput ratio is associated with a first time window for operations at the particular airport.

Example 13 includes the device of Example 12, wherein the first time window comprises a thirty-minute time window.

Example 14 includes the device of Example 12 or Example 13, wherein the impact congestion metric is associated with the first time window.

Example 15 includes the device of Example 14, wherein the one or more processors are configured to determine the impact congestion metric including modifying the impact congestion metric based at least on a value of the impact congestion metric during a second time window, wherein the second time window is earlier than the first time window.

Example 16 includes the device of any of Examples 1 to 15, wherein the one or more processors are configured to determine the impact congestion metric including classifying the impact congestion metric into one of a plurality of congestion tiers.

According to Example 17, a method includes generating, by a processor, an operational congestion metric associated with a particular airport, wherein the operational congestion metric is based at least on one or more usage metrics for the particular airport; generating, by the processor, an impact congestion metric non-linearly based at least on the operational congestion metric; determining, by the processor, based on the impact congestion metric, a congestion prediction for the particular airport; and communicating, by the processor, a congestion alert for the particular airport, wherein the congestion alert is based at least on the congestion prediction.

Example 18 includes the method of Example 17, wherein the impact congestion metric is related to the operational congestion metric by a logistic function.

Example 19 includes the method of Example 17 or Example 18, wherein determining the congestion prediction comprises determining, by a trained machine learning model, the congestion prediction.

According to Example 20, a non-transient, computer-readable medium comprises instructions that, when executed by one or more processors, cause the one or more processors to generate, by a processor, an operational congestion metric associated with a particular airport, wherein the operational congestion metric is based at least on one or more usage metrics for the particular airport; generate, by the processor, an impact congestion metric non-linearly based at least on the operational congestion metric; determine, by the processor, based on the impact congestion metric, a congestion prediction for the particular airport; and communicate, by the processor, a congestion alert for the particular airport, wherein the congestion alert is based at least on the congestion prediction..

The illustrations of the examples described herein are intended to provide a general understanding of the structure of the various implementations. The illustrations are not intended to serve as a complete description of all of the elements and features of apparatus and systems that utilize the structures or methods described herein. Many other implementations may be apparent to those of skill in the art upon reviewing the disclosure. Other implementations may be utilized and derived from the disclosure, such that structural and logical substitutions and changes may be made without departing from the scope of the disclosure. For example, method operations may be performed in a different order than shown in the figures or one or more method operations may be omitted. Accordingly, the disclosure and the figures are to be regarded as illustrative rather than restrictive.

Moreover, although specific examples have been illustrated and described herein, it should be appreciated that any subsequent arrangement designed to achieve the same or similar results may be substituted for the specific implementations shown. This disclosure is intended to cover any and all subsequent adaptations or variations of various implementations. Combinations of the above implementations, and other implementations not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features may be grouped together or described in a single implementation for the purpose of streamlining the disclosure. Examples described above illustrate but do not limit the disclosure. It should also be understood that numerous modifications and variations are possible in accordance with the principles of the present disclosure. As the following claims reflect, the claimed subject matter may be directed to less than all of the features of any of the disclosed examples. Accordingly, the scope of the disclosure is defined by the following claims and their equivalents.

**Claims**

1. A device comprising (102):
   one or more processors (106) configured to:

   generate an operational congestion metric (114) associated with a particular airport, wherein the operational congestion metric is based at least on one or more usage metrics (122) for the particular airport;
   generate an impact congestion metric (116) non-linearly based at least on the operational congestion metric;
   determine based on the impact congestion metric, a congestion prediction (118) for the particular airport; and
   communicate a congestion alert (138) for the particular airport, wherein the congestion alert is based at least on the congestion prediction.

2. The device of claim 1, wherein the impact congestion metric is related to the operational congestion metric by a logistic function.

3. The device of any one of claims 1 or 2, wherein the one or more processors are configured to generate the operational congestion metric including generating a first takeoff congestion metric associated with take-offs at the particular airport and a first landing congestion metric associated with landings at the particular airport.

4. The device of any one of claims 1 to 3, wherein the one or more processors are configured to generate the impact congestion metric including generating a second takeoff congestion metric associated with take-offs at the particular airport and a second landing congestion metric associated with landings at the particular airport.

5. The device of any one of claims 1 to 4, wherein the one or more processors are configured to determine the congestion prediction including determining, by a trained machine learning model (120), the congestion prediction.

**6.** The device of claim 5, wherein training data for the trained machine learning model comprises historical congestion metric data (124), flight event data (126), flight schedule data (128), weather data (130), or a combination thereof.

**7.** The device of any one of claims 1 to 6, wherein the one or more processors are further configured to obtain the one or more usage metrics.

**8.** The device of claim 7, wherein at least one of the one or more usage metrics is obtained from a globally available data source (136).

**9.** The device of any one of claims 1 to 8, wherein the one or more usage metrics comprise flight event data, flight schedule data, weather data, or a combination thereof.

**10.** The device of any one of claims 1 to 9, wherein the one or more usage metrics comprise planned flight event data, planned flight operational data, actual flight event data, actual flight operational data, or a combination thereof.

**11.** The device of any one of claims 1 to 10, wherein the operational congestion metric comprises an operational throughput ratio.

**12.** The device of claim 11, wherein the operational throughput ratio is associated with a first time window for operations at the particular airport.

**13.** The device of claim 12, wherein the first time window comprises a thirty-minute time window.

**14.** A method (400) comprising:

> generating (402), by a processor (106), an operational congestion metric (114) associated with a particular airport, wherein the operational congestion metric is based at least on one or more usage metrics (122) for the particular airport;
> generating (404), by the processor, an impact congestion metric (116) nonlinearly based at least on the operational congestion metric;
> determining (406), by the processor, based on the impact congestion metric, a congestion prediction (118) for the particular airport; and
> communicating (408), by the processor, a congestion alert (138) for the particular airport, wherein the congestion alert is based at least on the congestion prediction.

**15.** A non-transient, computer-readable medium (530) comprising instructions (534) that, when executed by one or more processors (520), cause the one or more processors to:

> generate, by a processor (106), an operational congestion metric (114) associated with a particular airport, wherein the operational congestion metric is based at least on one or more usage metrics (122) for the particular airport;
> generate, by the processor, an impact congestion metric (116) non-linearly based at least on the operational congestion metric;
> determine, by the processor, based on the impact congestion metric, a congestion prediction (118) for the particular airport; and
> communicate, by the processor, a congestion alert (138) for the particular airport, wherein the congestion alert is based at least on the congestion prediction.

100

**COMPUTING DEVICE 102**

**MEMORY 108**

USAGE METRIC(S) 122

HISTORICAL CONGESTION METRIC DATA 124

FLIGHT EVENT DATA 126

FLIGHT SCHEDULE DATA 128

WEATHER DATA 130

CONGESTION ALERT
138

**DEVICE(S) 104**

PROCESSOR(S) 132

MEMORY 134

**PROCESSOR(S) 106**

CONGESTION METRIC GENERATOR
110

FIRST CONGESTION METRIC
114

SECOND CONGESTION METRIC
116

GLOBALLY AVAILABLE DATA SOURCE(S) 136

CONGESTION PREDICTOR 112

CONGESTION PREDICTION 118

TRAINED MACHINE LEARNING MODEL 120

**FIG. 1**

**FIG. 2**

EP 4 760 610 A1

**FIG. 3**

EP 4 760 610 A1

400

GENERATING, BY A PROCESSOR, A FIRST CONGESTION METRIC ASSOCIATED WITH A PARTICULAR AIRPORT, WHEREIN THE FIRST CONGESTION METRIC IS BASED AT LEAST ON ONE OR MORE USAGE METRICS FOR THE PARTICULAR AIRPORT — 402

GENERATING, BY THE PROCESSOR, A SECOND CONGESTION METRIC NON-LINEARLY BASED AT LEAST ON THE FIRST CONGESTION METRIC — 404

DETERMINING, BY THE PROCESSOR, BASED ON THE SECOND CONGESTION METRIC, A CONGESTION PREDICTION FOR THE PARTICULAR AIRPORT — 406

COMMUNICATING, BY THE PROCESSOR, A CONGESTION ALERT FOR THE PARTICULAR AIRPORT, WHEREIN THE CONGESTION ALERT IS BASED AT LEAST ON THE CONGESTION PREDICTION — 408

# FIG. 4

500 —

**COMPUTING DEVICE 510**

**SYSTEM MEMORY 530**

OPERATING SYSTEM 532

APPLICATIONS
(E.G., INSTRUCTIONS) 534

INSTRUCTION(S) 536

CONGESTION METRIC
GENERATOR 110

CONGESTION
PREDICTOR 112

PROGRAM DATA 538

USAGE METRIC(S) 122

STORAGE
DEVICE(S) 550

INPUT/OUTPUT
DEVICE(S) 570

INPUT/OUTPUT
INTERFACE(S) 540

PROCESSOR(S) 520

COMMUNICATIONS
INTERFACE(S) 560

DEVICE(S) OR
CONTROLLER(S) 580

**FIG. 5**

18

Europäisches
Patentamt

European
Patent Office

Office européen
des brevets

## EUROPEAN SEARCH REPORT

**Application Number**

EP 24 38 3360

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/193841 A1 (D'ALTO LUIS [ES] ET AL) 18 June 2020 (2020-06-18) * paragraph [0039] - paragraph [0049]; figure 2 * * paragraph [0061]; figure 5 * * paragraph [0063] - paragraph [0069]; figure 7 * ----- | 1-15 | INV. G06Q10/04 G06Q50/40 G08G1/01 G08G5/22 G08G5/26 G08G5/55 H04L47/12 G06N20/00 G06N3/08 |
| A | US 2019/147748 A1 (BOOZARJOMEHRI ELHAM [CA] ET AL) 16 May 2019 (2019-05-16) * paragraph [0028]; figure 4 * ----- | 1-15 | |
| A | US 2021/358313 A1 (AYHAN SAMET M [US] ET AL) 18 November 2021 (2021-11-18) * paragraph [0103]; figure 15 * ----- | 1-15 | |

TECHNICAL FIELDS
SEARCHED        (IPC)

G06Q
G08G
G06N
H04L

The present search report has been drawn up for all claims

| Place of search | Date of completion of the search | Examiner |
|---|---|---|
| Munich | 23 April 2025 | Radovic, Dusica |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P4C01)

## ANNEX TO THE EUROPEAN SEARCH REPORT
## ON EUROPEAN PATENT APPLICATION NO.

EP 24 38 3360

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2025

| Patent document cited in search report | | | Publication date | Patent family member(s) | | | Publication date |
|---|---|---|---|---|---|---|---|
| US 2020193841 | A1 | | 18-06-2020 | CN | 111326025 | A | 23-06-2020 |
| | | | | EP | 3671696 | A1 | 24-06-2020 |
| | | | | US | 2020193841 | A1 | 18-06-2020 |
| US 2019147748 | A1 | | 16-05-2019 | NONE | | | |
| US 2021358313 | A1 | | 18-11-2021 | CN | 113673740 | A | 19-11-2021 |
| | | | | EP | 3910567 | A1 | 17-11-2021 |
| | | | | US | 2021358313 | A1 | 18-11-2021 |

EPO FORM P0459

For more details about this annex : see Official Journal of the European Patent Office, No. 12/82